# EUROPÄISCHE PATENTSCHRIFT

(11) **EP 0 674 076 B1**
(45) Veröffentlichungstag und Bekanntmachung des Hinweises auf die Patenterteilung: **17.06.1998**
(21) Anmeldenummer: 95103905.6
(22) Anmeldetag: 17.03.1995
(51) Int. Cl.: E05D 11/00, B23B 47/28

(54) **Verfahren und Vorrichtung zum Anbringen der Befestigungsbohrungen für Rahmen- und Flügelbandteile**
Method and device for machining bolt holes for fittings for window frames and wings
Procédé et dispositif pour usiner des trous de fixation pour des ferrures pour cadre et battant

(30) Priorität: 23.03.1994 DE 4410079
(43) Veröffentlichungstag der Anmeldung: 27.09.1995
(73) Patentinhaber: Schüring GmbH & Co. Fenstertechnologie KG, 53842 Troisdorf (DE)
(72) Erfinder: Förster, Hans Ulrich, D-51143 Köln (DE)
(74) Vertreter: Freischem, Werner, Dipl.-Ing.

(56) Entgegenhaltungen:
- EP-A- 0 176 091
- DE-A- 4 218 933
- DE-U- 9 010 314

## Beschreibung

Die Erfindung bezieht sich auf ein Verfahren sowie eine Vorrichtung zum Anbringen der Befestigungsbohrungen für Rahmen- und Flügelbandteile in ein Blendrahmenprofil aus Kunststoff und in ein Flügelrahmenprofil aus Kunststoff.

Zum Anbringen derartiger Bohrungen für Rahmen- und Flügelbandteile sind Bohrlehren bekannt, welche mindestens zwei Bohrschablonen aufweisen, die mit einer Gruppe von Bohrbuchsen versehen sind, welche entsprechend dem Bohrbild des Rahmenbandteils angeordnet sind, und eine Gruppe von Bohrbuchsen, die entsprechend dem Bohrbild des Flügelbandteils angeordnet sind. Diese Bohrschablonen sind auf einer Führungsschiene längsverschiebbar und feststellbar angeordnet. Die Führungsschiene ist mit mindestens einem Anschlag versehen, der an das obere Querprofil des Blendrahmens oder des Flügelrahmens anlegbar ist.

Die bekannte Bohrlehre wird an einen fertigen Blendrahmen oder Flügelrahmen angelegt, um in das bandseitige Blendrahmenprofil oder Flügelrahmenprofil die Befestigungsbohrungen für die Rahmenbandteile oder die Flügelbandteile anzubringen.

Der vorliegenden Erfindung liegt die Aufgabe zugrunde, ein Verfahren und eine Vorrichtung zu schaffen, mit deren Hilfe das Anbringen der Befestigungsbohrungen für die Rahmen- und Flügelbandteile vereinfacht ist und das Anbringen dieser Bohrungen trotz der Vereinfachung präzisiert ist.

Diese Aufgabe wird erfindungsgemäß dadurch gelöst, daß vor dem Zusammenschweißen der aus Kunststoff bestehenden Blendrahmenprofile und Flügelrahmenprofile das bandseitige Blendrahmenprofil und das bandseitige Flügelrahmenprofil auf einem Bearbeitungstisch mit der Bandseite nach oben in eine Lage zueinander angeordnet werden, die der Lage entspricht, welche diese Teile nach dem Zusammenbau der Tür oder des Fensters in Schließstellung einnehmen sollen, und daß eine Bohrschablone an das Blendrahmenprofil und das Flügelrahmenprofil angelegt wird, welche Bohrbuchsen entsprechend dem Bohrbild des Rahmenbandteils und Bohrbuchsen entsprechend dem Bohrbild des Flügelbandteils aufweist, und bei einer Einstellung die Bohrungen zum Befestigen des Rahmenbandteils und des Flügelbandteils angebracht werden.

Eine Vorrichtung zur Durchführung dieses Verfahrens ist dadurch gekennzeichnet, daß sie sich zusammensetzt
- aus einem Bearbeitungstisch mit einer Anlageschulter für das bandseitige Blendrahmenprofil und einer an der Anlageschulter angrenzenden erhöhten Auflagefläche für das bandseitige Flügelrahmenprofil und
- aus mindestens einer Bohrschablone mit einem an die Außenseite des Blendrahmenprofils anlegbaren Anschlag und einem das Kammermaß zwischen Blendrahmenprofil und Flügelrahmenprofil bestimmenden und sich an der Außenseite des Flügelrahmenprofils anlegenden Anschlag sowie mit Bohrbuchsen, die entsprechend dem Bohrbild des Rahmenbandteils angeordnet sind und mit Bohrbuchsen, die entsprechend dem Bohrbild des Flügelbandteils angeordnet sind.

Das erfindungsgemäße Verfahren sowie die erfindungsgemäße Vorrichtung haben den Vorteil, daß der Bearbeitungstisch relativ schmal ist und deshalb wenig Raum beansprucht. Ferner werden mit einer Einstellung der Bohrschablone sowohl die Bohrungen für das Rahmenbandteil als auch die Bohrungen für das Flügelbandteil angebracht. Da beim Verschweißen der Blendrahmenprofile zu einem Blendrahmen und der Flügelrahmenprofile zu einem Flügelrahmen in Längsrichtung zu diesen Rahmenprofilen nur eine sehr geringe, höchstens bei wenigen zehntel Millimetern liegende Verschiebung eintritt, erfolgt das Anbringen der Befestigungsbohrungen sehr präzise.

Vorteilhafterweise sind am Bearbeitungstisch und an der Bohrschablone Anschläge angebracht, die eine schnelle und zuverlässige Zuordnung des Flügelrahmenprofils zum Blendrahmenprofil gewährleisten. Am Bearbeitungstisch kann zusätzlich eine Klemmvorrichtung angebracht sein, die mechanisch, hydraulisch oder pneumatisch die auf dem Bearbeitungstisch zueinander ausgerichteten Profile festklemmt, bevor mit Hilfe der Bohrschablone die Bohrungen angebracht werden.

Weitere Merkmale der Erfindung ergeben sich aus den Patentansprüchen 3 - 14.

In der folgenden Beschreibung wird unter Bezugnahme auf die Zeichnungen ein Ausführungsbeispiel der Erfindung näher erläutert. Es zeigen die
- Fig. 1: eine Schnittansicht des Bearbeitungstisches mit darauf angeordnetem Blendrahmenprofil und Flügelrahmenprofil und Bohrschablone,
- Fig. 2: eine Draufsicht auf eine Bohrschablone,
- Fig. 3: eine Frontansicht der Bohrschablone,
- Fig. 4: eine Frontansicht des Bearbeitungstisches mit aufgelegtem Blendrahmenprofil und Flügelrahmenprofil und angesetzter Bohrlehre mit drei Bohrschablonen,
- Fig. 5: eine Draufsicht auf den Bearbeitungstisch und
- Fig. 6: eine Draufsicht auf eine Bohrlehre mit drei Bohrschablonen.

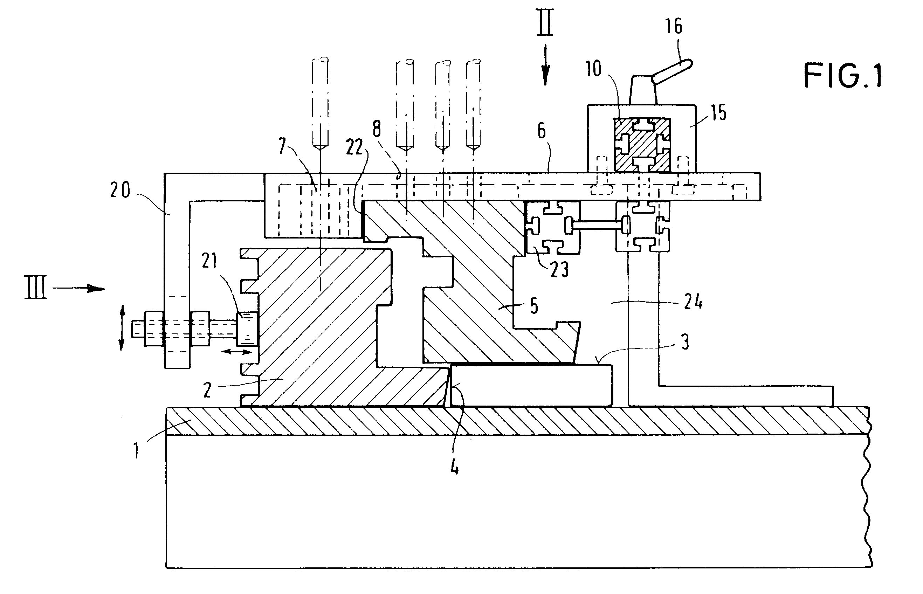

Der Bearbeitungstisch nach Fig. 1 ist mit einer Anlageschulter 4 versehen, gegen die ein Blendrahmenprofil 2 angelegt wird. An die Anlageschulter 4 grenzt eine erhöhte Auflagefläche 3 an, auf welche ein Flügelrahmenprofil 5 aufgelegt ist. Die Höhe der Auflagefläche 3 über der Ebene des Bearbeitungstisches 1 ist etwas größer als die Dicke der Anschlagleiste des Blendrahmenprofils 2. Auf die beiden Profile 2 und 5 ist eine Bohrschablone 6 aufgelegt, welche Bohrbuchsen 7 entsprechend dem Bohrbild 17 des Rahmenbandteils und Bohrbuchsen 8 entsprechend dem Bohrbild 18 des Flügelbandteils aufweist. Die Bohrschablone 6 ist mit einem Winkelteil 20 versehen, an dem Anschläge 21 befestigt sind, die sich gegen die Außenseite des Blendrahmenprofils 2 anlegen. Ferner ist an der Unterseite der Bohrschablone 6 ein Anschlag 22 angebracht, der sich gegen die Außenseite des Flügelrahmenteils 5 anlegt. Bei richtiger Einstellung der Anschläge 21 schiebt der Anschlag 22 das Flügelrahmenprofil 5 in einen solchen Abstand vom Blendrahmenprofil, daß ein vorgeschriebenes bzw. erwünschtes Kammermaß zwischen diesen beiden Profilen erreicht wird. Ferner ist an der Unterseite der Bohrschablone 6 noch ein einstellbarer Anschlag 23 angebracht, der gegen die Innenseite des Flügelrahmenprofils 5 anlegbar ist. Mit Hilfe der Anlageschulter 4 und der erhöhten Auflagefläche 3 des Bearbeitungstisches 1 sowie der Anschläge 21, 22 und 23 der Bohrschablone 6 werden das Blendrahmenprofil 2 und das Flügelrahmenprofil 5 in der erwünschten Weise einander zugeordnet.

Die Bohrschablone 6 ist mittels eines Klemmschuhs 15 und einer Klemmschraube 16 verschiebbar und feststellbar auf einer Führungsschiene 10 geführt.

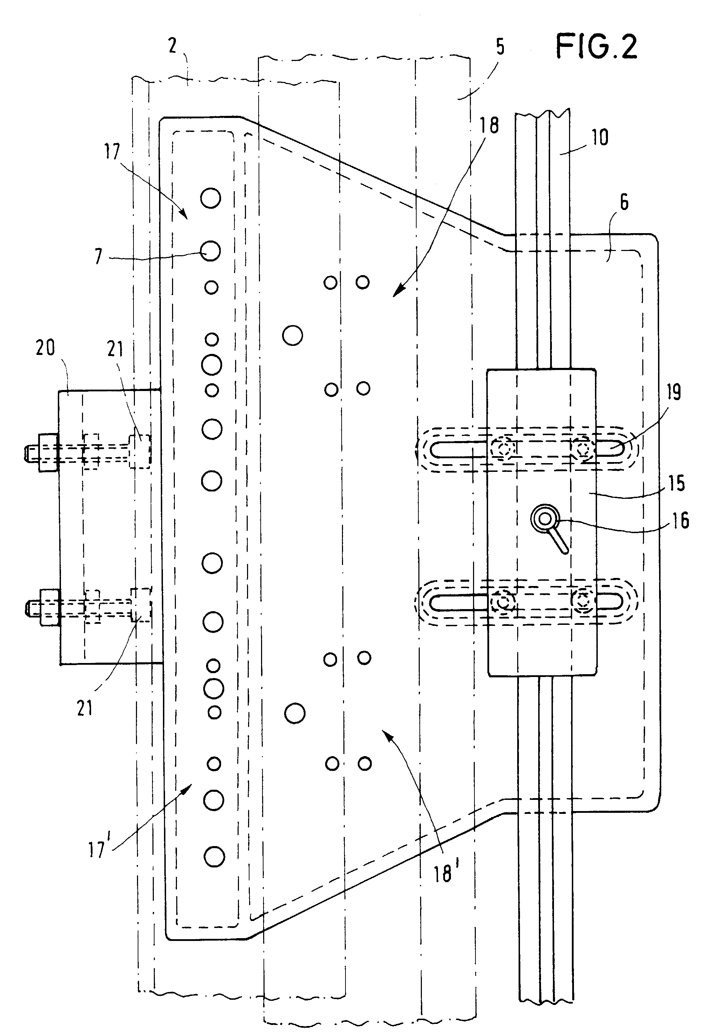

Die Fig. 2 zeigt eine Draufsicht auf die Bohrschablone 6. Die Bohrschablone 6 ist an einen Klemmschuh 15 angeschraubt. Die Schrauben sind durch einen Längschlitz 19 geführt, so daß bei Lösen der Schrauben die Bohrschablone 6 rechtwinklig zur Führungsschiene 10 einstellbar ist. Die Bohrschablone 6 ist mit zwei Gruppen von Bohrbuchsen 7 und 8 versehen, die dem Bohrbild 17,17' bzw. 18,18' des Rahmenbandteils und des Flügelbandteils entsprechen. Die Anschläge 21 sind rechtwinklig zur Führungsschiene 10 einstellbar, so daß die Bohrschablone unterschiedlichen Blendrahmenprofilen angepaßt werden kann.

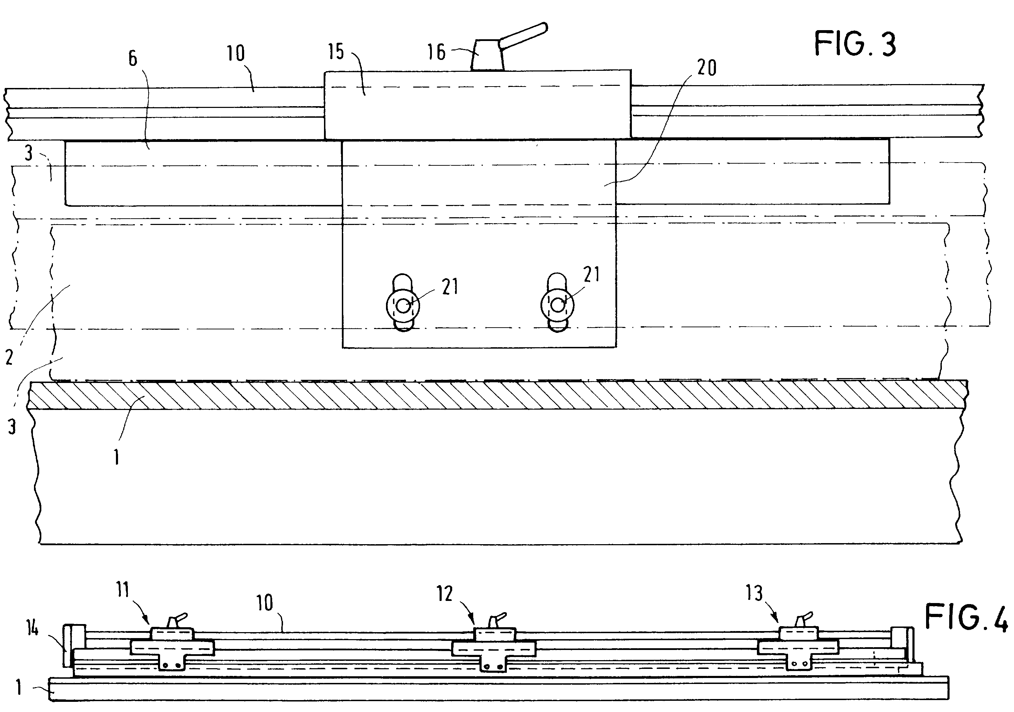

Wie die Fig. 3 zeigt, sind die Anschläge 21 auch in ihrer Höhe einstellbar. Die Bohrschablone 6 ist im Spritzgußverfahren aus einem faserverstärkten Kunststoff hergestellt. Durch Einsetzen von Metallbuchsen können die Bohrbuchsen 7 und 8 verstärkt sein.

Wie die Fig. 4 zeigt, können auf einer Führungsschiene 10 zwei oder drei Bohrschablonen 11, 12 oder 13 angeordnet sein, je nachdem, ob der Türflügel von zwei Bändern oder von drei Bändern gehalten werden soll.

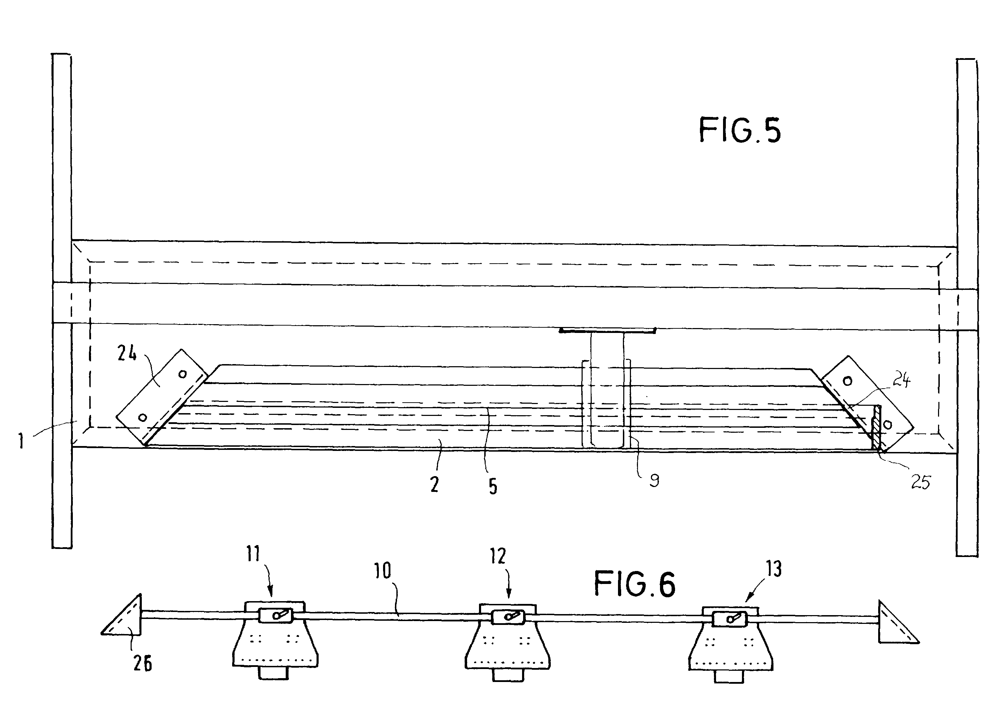

Wie die Fig 5 zeigt, sind zur Festlegung des bandseitigen Blendrahmenprofils 2 und des bandseitigen Flügelrahmenprofils 5 Anschläge 24 und 25 vorgesehen. Weil das Flügelrahmenprofil 5 sowohl oben als auch unten auf Gehrung geschnitten ist, sind auf dem Bearbeitungstisch 1 zwei Gehrungsanschläge 24 angebracht, zwischen denen das Flügelrahmenprofil 5 eingelegt wird. Da das Blendrahmenprofil 2 am unteren Ende rechtwinklig zur Längserstreckung geschnitten ist, ist dort ein Anschlag 25 vorgesehen. Das Blendrahmenprofil 2 wird also zwischen einen Anschlag 24 und den Anschlag 25 eingelegt, bevor die Bohrlehre mit den Bohrschablonen 6 auf die beiden Profile aufgelegt wird. In Fig. 4, 5 und 6 ist die Längserstreckung des Bearbeitungstisches 1, der Profile und der Führungsschiene verkürzt dargestellt.

In Fig. 6 ist die Führungsschiene 10 mit Gehrungsanschlägen 26 versehen. Diese Anschläge 26 sind an die Anschläge 24 des Bearbeitungstisches 1 anlegbar. Wie die Fig. 4 zeigt, kann aber die Führungsschiene 10 auch mit Anschlägen 14 versehen sein, die an die Enden des Blendrahmenprofils 2 oder des Flügelrahmenprofils 5 anlegbar sind.

Wie die Fig. 6 zeigt, sind in den Bohrschablonen 11, 12 und 13 Gruppen von Bohrbuchsen für die Rahmenbandteile und die Flügelbandteile so angeordnet, daß die einmal auf der Führungsschiene 10 festgelegten Bohrschablonen 11,12 und 13 sowohl für links angeschlagene Türen als auch für rechts angeschlagene Türen verwendet werden können, ohne daß die Bohrschablonen auf der Führungsschiene 10 versetzt werden müßten.

### Bezugszeichenliste

- 1: Bearbeitungstisch
- 2: Blendrahmenprofil
- 3: erhöhte Auflagefläche
- 4: Anlageschulter
- 5: Flügelrahmenprofil
- 6: Bohrschablone
- 7: Bohrbuchse für Rahmenbandteil
- 8: Bohrbuchse für Flügelbandteil
- 9: Klemmvorrichtung
- 10: Führungsschiene
- 11: erste Bohrschablone
- 12: zweite Bohrschablone
- 13: dritte Bohrschablone
- 14: Anschlag der Führungsschiene
- 15: Klemmschuh
- 16: Klemmschraube
- 17: Bohrbild für Rahmenbandteil rechts
- 17': Bohrbild für Rahmenbandteil links
- 18: Bohrbild für Flügelbandteil rechts
- 18': Bohrbild für Flügelbandteil links
- 19: Langloch
- 20: Winkelteil
- 21: Anschlag gegen Blendrahmenprofil
- 22: Anschlagleiste gegen Flügelrahmenprofil
- 23: einstellbarer Anschlag gegen Flügelrahmenprofil
- 24: Gehrungsanschlag für Flügelrahmenprofil und Blendrahmenprofil
- 25: Anschlag für Blendrahmenprofil
- 26: Gehrungsanschlag an Führungsschiene

## Patentansprüche

1. Verfahren zum Anbringen der Befestigungsbohrungen für Rahmen- und Flügelbandteile in ein Blendrahmenprofil (2) aus Kunststoff und in ein Flügelrahmenprofil (5) aus Kunststoff,
dadurch gekennzeichnet, daß vor dem Zusammenschweißen der Blendrahmenprofile zu einem Blendrahmen und vor dem Zusammenschweißen der Flügelrahmenprofile zu einem Flügelrahmen das bandseitige Blendrahmenprofil (2) und das bandseitige Flügelrahmenprofil (5) auf einem Bearbeitungstisch (1) mit der Bandseite nach oben in eine Lage zueinander angeordnet werden, die der Lage entspricht, welche diese Teile nach dem Zusammenbau der Tür oder des Fensters in Schließstellung einnehmen sollen, und daß eine Bohrschablone (6) an das Blendrahmenprofil (2) und das Flügelrahmenprofil (5) angelegt wird, welche Bohrbuchsen (7) entsprechend dem Bohrbild (17) des Rahmenbandteils und Bohrbuchsen (8) entsprechend dem Bohrbild (18) des Flügelbandteils aufweist, und die Bohrungen zum Befestigen der Rahmenbandteile und der Flügelbandteile angebracht werden.

2. Vorrichtung zur Durchführung des Verfahrens nach Anspruch 1, dadurch gekennzeichnet, daß sie sich zusammensetzt
- aus einem Bearbeitungstisch (1) mit einer Anlageschulter (4) für das bandseitige Blendrahmenprofil (2) und einer an der Anlageschulter (4) angrenzenden erhöhten Auflagefläche (3) für das bandseitige Flügelrahmenprofil (5) und
- aus mindestens einer Bohrschablone (6) mit einem an die Außenseite des Blendrahmenprofils (2) anlegbaren Anschlag (21) und einem das Kammermaß zwischen Blendrahmenprofil (2) und Flügelrahmenprofil (5) bestimmenden und sich an der Außenseite des Flügelrahmenprofils (5) anlegenden Anschlag (22) sowie mit Bohrbuchsen (7), die entsprechend dem Bohrbild (17) des Rahmenbandteils angeordnet sind und mit Bohrbuchsen (8), die entsprechend dem Bohrbild (18) des Flügelbandteils angeordnet sind.

3. Vorrichtung nach Anspruch 2, dadurch gekennzeichnet, daß der Bearbeitungstisch (1) mit das Blendrahmenprofil (2) und das Flügelrahmenprofil (5) in Längsrichtung fixierenden Anschlägen (24,25) versehen ist.

4. Vorrichtung nach Anspruch 3, dadurch gekennzeichnet, daß der Abstand der Anschläge (24,25) für die Enden des Blendrahmenprofils (2) und des Flügelrahmenprofils (5) voneinander einstellbar ist.

5. Vorrichtung nach einem der Ansprüche 2 bis 4, dadurch gekennzeichnet, daß an der Bohrschablone (6) ein gegen die Innenseite des bandseitigen Flügelrahmenprofils (5) verschiebbarer und feststellbarer Anschlag (23) angeordnet ist.

6. Vorrichtung nach einem der Ansprüche 2 bis 5, dadurch gekennzeichnet, daß der an die Außenseite des Blendrahmenprofils (2) anlegbare Anschlag (21) einstellbar ist.

7. Vorrichtung nach einem der Ansprüche 2 bis 6, dadurch gekennzeichnet, daß die erhöhte Auflagefläche (3) in ihrer Höhe einstellbar ist.

8. Vorrichtung nach einem der Ansprüche 2 bis 7, dadurch gekennzeichnet, daß der Bearbeitungstisch (1) mit einer das Blendrahmenprofil (2) und das Flügelrahmenprofil (5) nach ihrer Ausrichtung fixierenden Klemmvorrichtung versehen ist.

9. Vorrichtung nach einem der Ansprüche 2 bis 8, dadurch gekennzeichnet, daß der an die Außenseite des Flügelrahmenprofils (5) anlegbare Anschlag (22) von einer leistenartigen Anformung der Bohrschablone (6) gebildet ist und die entsprechend dem Bohrbild (17) des Rahmenbandteils angeordneten Bohrbuchsen (7) innerhalb der leistenartigen Anformung angeordnet sind.

10. Vorrichtung nach einem der Ansprüche 2 bis 9, dadurch gekennzeichnet, daß die Bohrschablone (6) aus faserverstärktem Kunststoff im Spritzgußverfahren hergestellt ist.

11. Vorrichtung nach einem der Ansprüche 2 bis 10, gekennzeichnet durch zwei oder drei Bohrschablonen (11, 12, 13), die auf einer Führungsschiene (10) in Längsrichtung einstellbar und feststellbar geführt sind.

12. Vorrichtung nach Anspruch 11, dadurch gekennzeichnet, daß die Bohrschablonen (11,12,13) rechtwinklig zur Führungsschiene (10) einstellbar an der Führungsschiene (10) befestigt sind.

13. Vorrichtung nach Anspruch 11 oder 12, dadurch gekennzeichnet, daß die Führungsschiene (10) mit mindestens einem Anschlag (14 oder 26) versehen ist, der gegen einen Anschlag (24 oder 25) des Bearbeitungstisches (1) oder ein Ende des Blendrahmenprofils (2) oder des Flügelrahmenprofils (5) anlegbar ist.

14. Vorrichtung nach einem der Ansprüche 2 bis 13, dadurch gekennzeichnet, daß in den Bohrschablonen (11,12,13) jeweils eine weitere, entsprechend dem Bohrbild (17) der Rahmenbandteile angeordnete Gruppe von Bohrbuchsen (7) und jeweils eine weitere, entsprechend dem Bohrbild (18) der Flügelbandteile angeordnete Gruppe von Bohrbuchsen (8) angeordnet sind, die gegenüber der jeweils ersten Gruppe in Längsrichtung um ein solches Maß versetzt sind, daß die in Längsrichtung auf der Führungsschiene (10) eingestellten Bohrschablonen (11,12,13) sowohl bei links als auch bei rechts angeschlagenen Türen oder Fenstern ohne Verstellen der Bohrschablonen (11,12,13) durch Wenden der Führungsschiene (10) nutzbar sind.

## Claims

1. A method of installing the mounting holes for frame and leaf or wing hinge portions in a plastics door or window frame profile (2) and a plastics leaf or casement profile (5),
characterised in that, before the door or window frame profiles are welded together to form a door or window frame and before the leaf or casement profiles are welded together to form a leaf or casement, the hinge-side door or window frame profile (2) and the hinge-side leaf or casement profile (5) are arranged on a machining table (1) with the hinge side facing upwards in a position relative to each other which corresponds to the position which these parts will assume when in the closed position after assembly of the door or window, and in that a drilling template (6) is placed on the door or window frame profile (2) and the leaf or casement profile (5), which drilling template (6) comprises drill bushes (7) corresponding to the hole layout (17) of the frame hinge portion and drill bushes (8) corresponding to the hole layout (18) of the leaf or wing hinge portion, and the holes for attaching the frame hinge portions and the leaf or wing hinge portions are installed.

2. A device for carrying out the method according to claim 1, characterised in that it comprises
- a machining table (1) with a locating shoulder (4) for the hinge-side door or window frame profile (2) and an elevated bearing surface (3), adjoining the locating shoulder (4), for the hinge-side leaf or casement profile (5) and
- at least one drilling template (6) with a limit stop (21) which may be positioned against the outside of the door or window frame profile (2) and a limit stop (22) defining the size of the chamber between the door or window frame profile (2) and the leaf or casement profile (5) and positionable against the outside of the leaf or casement profile (5), as well as drill bushes (7), which are arranged according to the hole layout (17) of the frame hinge portion, and drill bushes (8), which are arranged according to the hole layout (18) of the leaf or wing hinge portion.

3. A device according to claim 2, characterised in that the machining table (1) is provided with limit stops (24, 25) fixing the door or window frame profile (2) and the leaf or casement profile (5) in the longitudinal direction.

4. A device according to claim 3, characterised in that the distance between the limit stops (24, 25) for the ends of the door or window frame profile (2) and the leaf or casement profile (5) is adjustable.

5. A device according to any one of claims 2 to 4, characterised in that a securable limit stop (23) displaceable towards the inside of the hinge-side leaf or casement profile (5) is arranged on the drilling template (6).

6. A device according to any one of claims 2 to 5, characterised in that the limit stop (21) positionable against the outside of the door or window frame profile (2) is adjustable.

7. A device according to any one of claims 2 to 6, characterised in that the elevated bearing surface (3) is height-adjustable.

8. A device according to any one of claims 2 to 7, characterised in that the machining table (1) is provided with a clamping device fixing the door or window frame profile (2) and the leaf or casement profile (5) after alignment thereof.

9. A device according to any one of claims 2 to 8, characterised in that the limit stop (22) positionable against the outside of the leaf or casement profile (5) consists of a strip-type portion formed on the drilling template (6) and the drill bushes (7) arranged according to the hole layout (17) of the frame hinge portion are disposed inside the strip-type formed portion.

10. A device according to any one of claims 2 to 9, characterised in that the drilling template (6) is made of fibre-reinforced plastics and produced by the injection moulding method.

11. A device according to any one of claims 2 to 10, characterised by two or three drilling templates (11, 12, 13), which are guided on a guide rail (10) so as to be adjustable in the longitudinal direction and securable.

12. A device according to claim 11, characterised in that the drilling templates (11, 12, 13) are fixed to the guide rail (10) so as to be adjustable at right angles to said guide rail (10).

13. A device according to claim 11 or claim 12, characterised in that the guide rail (10) is provided with at least one limit stop (14 or 26) which may be positioned against a limit stop (24 or 25) on the machining table (1) or one end of the door or window frame profile (2) or the leaf or casement profile (5).

14. A device according to any one of claims 2 to 13, characterised in that an additional group of drill bushes (7) arranged according to the hole layout (17) of the frame hinge portions and an additional group of drill bushes (8) arranged according to the hole layout (18) of the leaf or wing hinge portions are each arranged in the drilling templates (11, 12, 13), which groups are displaced in the longitudinal direction relative to the respective first group by such an amount that the drilling templates (11, 12, 13) adjusted in the longitudinal direction on the guide rail (10) may be used for doors or windows hung on either the left- or right-hand side without adjustment of the drilling templates (11, 12, 13) by reversal of the guide rail (10).

## Revendications

1. Procédé d'usinage de trous de fixation pour des ferrures de cadre et battant dans un profilé de traverse dormante (2) en plastique et dans un profilé de cadre de battant (5) en plastique, caractérisé en ce que, avant le soudage du profilé de traverse dormante sur une traverse dormante et du profilé de cadre de battant sur un cadre de battant, le profilé de traverse dormante côté ferrure (2) et le profilé de cadre de battant côté ferrure (5) sont disposés sur un établi (1), le côté de la ferrure orienté vers le haut, dans une position correspondant à celle que prendront ces éléments après montage de la porte ou fenêtre en position fermée, et en ce qu'un gabarit de perçage (6) est placé sur le profilé de traverse dormante (2) et le profilé de cadre de battant (5), lequel gabarit de perçage présente des canons de perçage (7) agencés conformément à la configuration de perçage (17) de la ferrure de cadre et des canons de perçage (8) agencés conformément à la configuration de perçage (18) de la ferrure de battant, et en ce que les trous de fixation des ferrures de cadre et des ferrures de battant sont ensuite réalisés.

2. Dispositif de mise en oeuvre du procédé selon la revendication 1, caractérisé en ce qu'il se compose des éléments suivants :
- un établi (1) avec un épaulement de butée (4) pour le profilé de traverse dormante côté ferrure (2) et une surface d'appui (3) surélevée, contiguë à l'épaulement (4), destinée à recevoir le profilé de cadre de battant côté ferrure (5), et
- au moins un gabarit de perçage (6) avec une butée (21) susceptible d'être agencée contre la face extérieure du profilé de traverse dormante (2) et une butée (22) agencée contre la face extérieure du profilé de cadre de battant (5) et définissant l'espace entre le profilé de traverse dormante (2) et ledit profilé de cadre de battant (5), et avec des canons de perçage (7) agencés conformément à la configuration de perçage (17) de la ferrure de cadre et des canons de perçage (8) agencés conformément à la configuration de perçage (18) de la ferrure de battant.

3. Dispositif selon la revendication 2, caractérisé en ce que l'établi (1) est prévu avec des butées (24, 25) bloquant, dans le sens longitudinal, le profilé de traverse dormante (2) et le profilé de cadre de battant (5).

4. Dispositif selon la revendication 3, caractérisé en ce que la distance entre les butées (24, 25), prévues aux extrémités du profilé de traverse dormante (2) et du profilé de cadre de battant (5), est ajustable.

5. Dispositif selon l'une quelconque des revendications 2 à 4, caractérisé en ce que, sur le gabarit de perçage (6), est agencée une butée (23) susceptible d'être guidée en translation et bloquée en position contre la face interne du profilé de cadre de battant côté ferrure (5).

6. Dispositif selon l'une quelconque des revendications 2 à 5, caractérisé en ce que la butée (21) susceptible d'être agencée contre la face extérieure du profilé de traverse dormante (2) est ajustable.

7. Dispositif selon l'une quelconque des revendications 2 à 6, caractérisé en ce que la hauteur de la surface d'appui surélevée (3) est ajustable.

8. Dispositif selon l'une quelconque des revendications 2 à 7, caractérisé en ce que l'établi (1) est doté d'un dispositif de serrage bloquant le profilé de traverse dormante (2) et le profilé de cadre de battant (5) en position après leur alignement.

9. Dispositif selon l'une quelconque des revendications 2 à 8, caractérisé en ce que la butée (22) susceptible d'être agencée contre la face extérieure du profilé de cadre de battant (5) est un agencement en forme de rebord du gabarit de perçage (6) et en ce que les canons de perçage (7), agencés conformément à la configuration de perçage (17) de la ferrure de cadre, sont disposés à l'intérieur de l'agencement en forme de rebord.

10. Dispositif selon l'une quelconque des revendications 2 à 9, caractérisé en ce que le gabarit de perçage (6) est une pièce moulée par injection en matière plastique renforcée par des fibres.

11. Dispositif selon l'une quelconque des revendications 2 à 10, caractérisé en ce que deux ou trois gabarits de perçage (11, 12, 13) sont guidés dans le sens longitudinal sur un rail de guidage (10) et sont susceptibles d'être ajustés et bloqués en position.

12. Dispositif selon la revendication 11, caractérisé en ce que les gabarits de perçage (11, 12, 13) sont fixés sur le rail de guidage (10) et sont susceptibles d'être ajustés perpendiculairement audit rail de guidage (10).

13. Dispositif selon la revendication 11 ou 12, caractérisé en ce que le rail de guidage (10) est prévu avec au moins une butée (14 ou 26) susceptible d'être agencée contre une butée (24 ou 25) de l'établi (1) ou à une extrémité du profilé de traverse dormante (2) ou du profilé de cadre de battant (5).

14. Dispositif selon l'une quelconque des revendications 2 à 13, caractérisé en ce qu'un deuxième groupe de canons de perçage (7) agencés conformément à la configuration de perçage (17) des ferrures de cadre et un deuxième groupe de canons de perçage (8) agencés conformément à la configuration de perçage (18) des ferrures de battant sont disposés dans les gabarits de perçage (11, 12, 13) et sont décalés longitudinalement par rapport à chaque premier groupe d'une distance telle que les gabarits de perçage (11, 12, 13) ajustés sur le rail de guidage (10) dans le sens longitudinal sont susceptibles d'être utilisés pour des portes ou des fenêtres montées aussi bien à gauche qu'à droite, sans déplacement des gabarits de perçage, par simple pivotement du rail de guidage (10).
